# EUROPEAN PATENT APPLICATION

(11) **EP 1 596 489 A1**
(43) Date of publication of application: **16.11.2005**
(21) Application number: 04011367.2
(22) Date of filing: 13.05.2004
(51) Int. Cl.: H02M 1/12, H02M 3/335

(54) **Power supply unit with power factor correction and a television set comprising a respective power supply unit**

(71) Applicant: DEUTSCHE THOMSON-BRANDT GMBH, 78048 Villingen-Schwenningen (DE)
(72) Inventor: Hermann, Wolfgang, 78144 Tennenbronn (DE); Louvel, Jean-Paul, 78086 Brigachtal (DE); Meitzner, Michael, 78052 VS-Pfaffenweiler (DE)
(74) Representative: Arnold, Klaus-Peter

(57) **Abstract**

The power supply unit operates in a standby mode and in a normal mode and comprises a first power supply (A) providing output voltages (U2-U5) during the standby mode, a second power supply providing output voltages during the normal mode, and a pre-converter (C) for providing a power factor correction, the pre-converter (C) operating as an up-converter during the normal operation mode and being switched off during the standby mode. A supply voltage (VCC3) for the pre-converter (C) is provided advantageously by the first or the second power supply for switching the pre-converter on and off. The power supply unit is in particular for a use within a rear-projection television set.

## Description

### FIELD OF THE INVENTION

The present invention relates to a power supply unit with a power factor correction for providing regulated output voltages. The power supply unit operates in particular in a low power standby mode and in a high power normal mode for a use within a consumer electronics appliance, for example a rear projection television set.

### BACKGROUND

It is well known to use power supply units having a standby operation mode and a normal operation mode in consumer electronics appliances, in particular, when the appliance is controllable via a remote control. In the standby mode, most of the circuits of the appliance are switched off, and only usually a remote control receiver and a micro-controller are operating, for allowing a user to switch between standby and normal operation via the remote control. For cost reasons, in the standby mode the power consumption should be as low as possible, whereas in the normal operation mode the power supply unit has to provide the full power for allowing the operation of all the circuits of the appliance.

Several possibilities for circuit designs are known to provide a power supply unit with a very low power consumption in standby mode: For example a switched mode power supply may be used which operates in a burst mode during standby mode. A further possibility is to use a switched mode power supply for the normal mode operation and a second power supply, in particular also a switched mode power supply, for the operation in the standby mode.

With this circuit design, the switched mode power supply for normal operation can be switched-off completely during the standby operation.

In the meanwhile it is required in several countries to equip power supplies above a certain power consumption with a power factor correction (PFC), for reducing the low frequency harmonic content of the waveform of the mains input voltage to a permissible value. Known solutions use a mains frequency coil with a high inductivity for providing a power factor correction for a switched mode power supply, disclosed for example in WO 03/052908. Other choices are to use a switched mode power supply comprising an inductor as a current pump, as disclosed for example in EP-A-1 368 885 or EP-A-0 700 145.

For the power factor correction also a step-up pre-converter may be used comprising an integrated controller circuit, which provides a very effective PFC solution. Integrated circuits of this kind are for example the circuit MC33260, manufactured by On Semiconductor (http://onsemi.com), and the circuit L6562 manufactured by ST Microelectronics (www.st.com). Upconverter power supplies of this kind usually comprise a regulation loop for providing a constant output voltage.

A switched mode power supply which comprises a transformer having a secondary winding, providing a supply voltage in a forward mode, when the switching transistor is conducting, is disclosed in WO-A-03/071792. The switched mode power supply described in this reference operates as a flyback converter, which regulates only a supply voltage provided by a flyback secondary winding. The supply voltage of a secondary winding operating in a forward mode is therefore unregulated, and is in particular dependent on the mains voltage.

When using a flyback converter power supply with an additional secondary winding operating in a forward mode, the size the core of the transformer has not to be increased, because the flyback secondary winding uses only the time interval for energy transmission, when the switching transistor is blocking. The forward secondary winding uses the time interval for energy transmission, when the switching transistor is conducting. Unregulated supply voltages may be used in particular for circuits, which need an adjustable supply voltage, for which a DC-DC converter is required in addition, or for circuits, for which a regulated DC-supply voltage is not necessary.

### SUMMARY OF THE INVENTION

It is the object of the present invention, to provide a power supply unit having a power factor correction, which is cost effective and comprises a low power standby mode, particular for a use within a consumer electronics appliance.

This object is achieved with a power supply unit as specified in claim 1. A television set comprising a power supply unit of this kind is specified in claim 9. Advantageous embodiments of the invention are specified in the subclaims.

A power supply unit, embodying an aspect of the invention, comprises a first power supply and a second power supply, the first power supply providing an output voltage during a standby operation mode, and the second power supply providing an output voltage during a normal operation mode. It comprises further a pre-converter for providing a power factor correction for the power supply unit, the pre-converter operating as an up-converter and comprising in particular a regulation loop for providing a stabilized output voltage. The pre-converter is switched off during the standby mode.

In a further aspect of the invention, the pre-converter is provided with a supply voltage by the first or the second power supply, via which the pre-converter is switched on and off. In preferred embodiments, the second power supply is switched on and off via a supply voltage provided by the first power supply, and the pre-converter is switched on and off via the same supply voltage, or by a supply voltage provided by the second power supply.

The first and the second power supply of the power supply unit are in particular both switched mode power supplies, for providing a high power conversion efficiency. During the standby mode, the second power supply and the pre-converter are both switched off, for providing a very low power consumption the standby mode.

The power supply unit may be used within a consumer electronics appliance, which operates in a standby mode and in a normal mode, for example a rear-projection television set comprising digital light processing unit. The output voltage of the pre-converter can be used in this special embodiment advantageously for the operation of the digital light processing unit.

Because the pre-converter provides a regulated output voltage, the switch mode power supply operating in the normal mode can use a transformer comprising a secondary winding operating in a forward mode, for example, for providing a stable DC supply voltage for an audio amplifier of the television set.

### BRIEF DESCRIPTION OF THE DRAWINGS

Preferred embodiments of the invention are explained in more detail with regard to schematic drawings, which show:

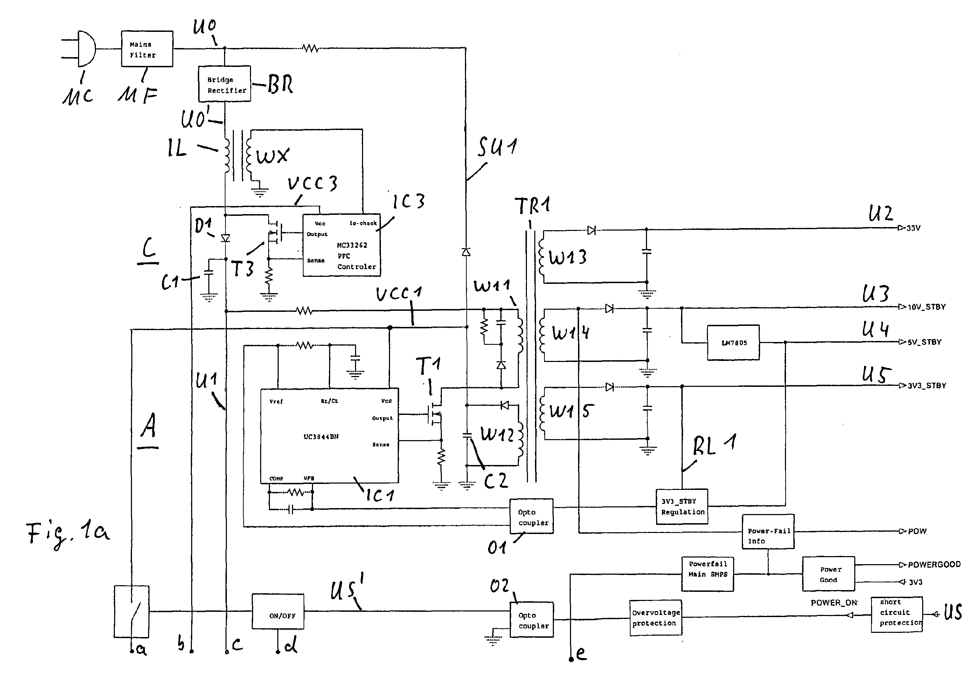

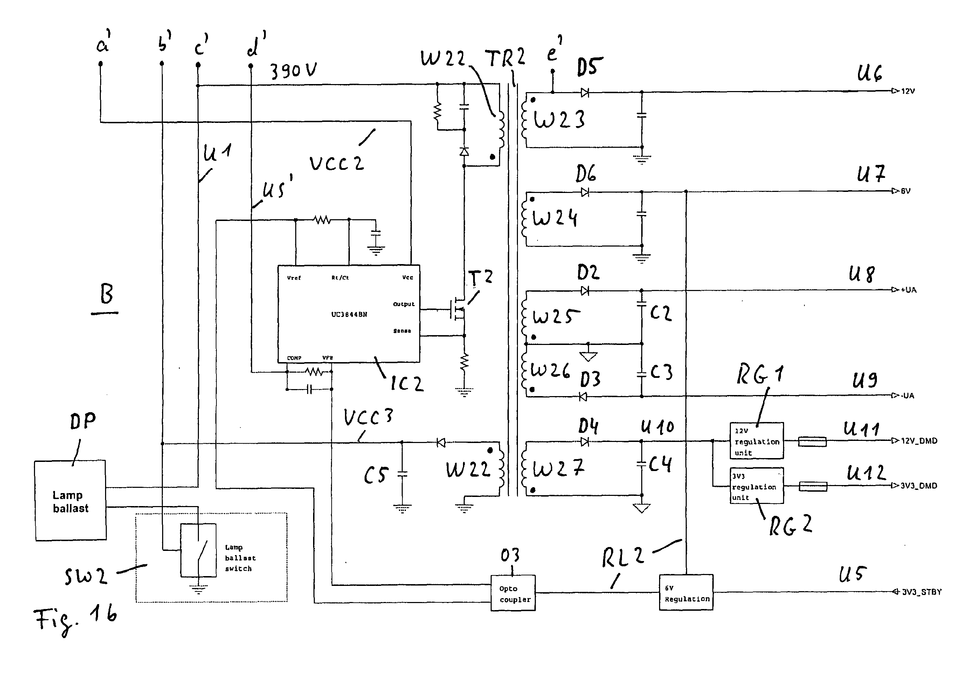

Figs. 1a, 1b a power supply unit comprising two switched mode power supplies and a pre-converter for providing a power factor correction.

### DETAILED DESCRIPTION OF PREFERRED EMBODIMENTS

In the Figs. 1a and 1b a power supply unit is shown comprising a first power supply A, a second power supply B and a pre-converter C, for providing regulated DC output voltages U2 - U10. The power supply unit is divided into two parts as shown in the figures, which are connected via terminals a-e shown in Fig. 1a and terminals a'- e', shown in Fig. 1b.

The input part of the power supply unit is shown in Fig. 1a and comprises a bridge rectifier BR, which is coupled to an input voltage Ù0 provided via a mains filter MF and a mains connection MC from mains. The bridge rectifier BR provides a rectified, but un-smoothed voltage U0' for a first terminal of an inductivity IL of the pre-converter C. The pre-converter C comprises further a switching transistor T3 and a rectifying diode D1, both coupled to a second terminal of the inductivity EL, for providing a DC output voltage U1. The voltage U1 is smoothed by a capacitor C1.

The switching transistor T3 is operated in this embodiment by an integrated control circuit IC3, for providing a stabilization of the output voltage U1. The pre-converter C operates as an up-converter power supply providing a power factor correction for the power supply unit, as known from prior art. Detailed circuit designs for preconverters of this kind are provided for example by manufacturers of respective integrated circuits. In this embodiment, the controller circuit IC3 is a MC33262 integrated circuit, manufactured by On-Semiconductor.

The controller circuit IC3 is sensitive to the rectified mains input voltage U0' via an auxiliary winding WX of the inductor IL and comprises in particular a regulation loop coupled to the output voltage U1, not shown, for stabilizing the voltage U1.

The voltage U1 is coupled to a primary winding W11 of a transformer TR1 of the first power supply A. The power supply A is in this embodiment a switched mode power supply comprising a switching transistor T1 coupled in series to the primary winding W11. The transformer TR1 comprises secondary windings W13, W14, W15 located on the secondary side of the power supply A, for providing stabilized output voltages U2-U5. The transformer TR1 comprises further a secondary winding W12 located at the primary side of the power supply A for providing a supply voltage VCC1 during operation of the power supply A. The supply voltage VCC1 is coupled to an integrated circuit IC1, which is arranged for the operation of the switching transistor T1. The integrated circuit IC1 is a known circuit UC3844. The supply voltage VCC1 is a DC voltage smoothed by a capacitor C2.

The power supply A comprises a regulation loop RL1 coupled to the output voltage U5, for providing a feedback signal via an opto-coupler O1 to a feedback input VFB of the control circuit IC1. The power supply A operates as a flyback converter, and via the regulation loop RL1, also the other output voltages U2-U4 are regulated. The power supply A comprises further a start-up circuit SU1 coupled to the input voltage U0, for providing a start up voltage for the control circuit IC1, when the power supply unit is switched on. A switched mode power supply of this kind is known from prior art and further design details for the operation are known for a skilled person.

The output voltage U1 of the pre-converter C is further coupled to the power supply B, a second switched mode power supply, as shown in Fig. 1b. The power supply B comprises a transformer TR2 with a primary winding W22, to which the voltage U1 is coupled. The transformer TR2 comprises further secondary windings W23-W27, for providing output voltages U6-U10, and a secondary winding W22 located on the primary side of the power supply B, for providing a supply voltage VCC3. To the primary winding W22 a switching transistor T2 is coupled, which is operated by an integrated control circuit IC2. The control circuit IC2 is in this embodiment also an integrated circuit UC3844. A feedback signal is coupled via a regulation loop RL2 comprising an opto-coupler 03 to a feedback input VFB of the control circuit IC2, for providing a stabilization of the output voltage U7. The power supply B can be switched on and off via a switch SW1, shown in Fig. 1a, which switches on and off the supply voltage VCC2 for the controller circuit IC2.

The operation of the power supply unit is as follows: when the power supply is switched on providing the filtered mains voltage U0, the first power supply A starts operating, because the voltage U0 is applied via the inductor IL and the diode D1 to the primary winding W11 of the transformer TR1, and at the same time the supply voltage VCC1 is generated via the start up circuit SU1.

When the voltage VCC1 is established, the control circuit IC1 starts operating, for generating the output voltages U2-U5. The voltage U5 in particular is provided for a micro-processor of a respective appliance, in which the power supply unit is arranged. The micro-processor, not shown, controls the standby mode operation and the normal mode operation of the appliance.

For the normal operation mode, the micro-processor provides a control signal US, which is coupled via an opto-coupler 02 to a switch SW1. For the normal operation, the switch SW1 is switched through, providing therefore a supply voltage VCC2, which is derived from the supply voltage VCC1, for the controller circuit IC2. The power supply B therefore starts operating, when the switch SW1 is closed. When no control voltage US' is applied to the switch SW1, the switch is open.

When the output voltages U6-U10 are established, also the supply voltage VCC3 is generated via the winding W22, which is used for the operation of the pre-converter C. The voltage VCC3 is applied to a VCC input of the controller circuit IC3, which subsequently starts operating also.

According to the invention, the pre-converter C is switched off during standby mode, together with the second power supply B. This is performed in this embodiment, in that the supply voltage VCC3 for the operation of the pre-converter C is supplied by the power supply B, which is switched off in standby mode. When the capacitor C5 providing the supply voltage VCC3 is discharged to a low voltage level, the controller circuit IC3 stops operating.

The power consumption is therefore reduced in standby mode, because the pre-converter is switched off. According to the power factor regulations, in this operating mode a power factor correction is not necessary. The pre-converter C is transparent for the input voltage U0', and the operation of the standby mode power supply A is therefore not affected when the pre-converter C is switched off. Only in the normal mode operation, the pre-converter C provides a power factor correction for the power supplies A and B.

In another embodiment, not shown, the supply voltage VCC3 is provided via the switch SW1, for deriving the supply voltage VCC3 also from the supply voltage VCC1 of the power supply A. Then, when the switch SW1 is actuated, the power supply B and the pre-converter C start operating at the same time. The control voltage US' may be coupled in addition to a comparator terminal COMP of the controller circuit IC2. This allows switching off the power supply B and the pre-converter C at the same time.

With the inventive arrangement, the power consumption of the power supply unit in standby mode can be very low, even when using an active power factor correction circuit. The power supply unit is in particular suited for use within a television set, which operates in a normal operation mode and a standby operation mode. In a preferred embodiment, the power consumption in standby mode is only 2,5 Watts.

The power supply as shown in Figs. 1a and 1b is used for example within a rear-projection television set, which uses a digital light processing unit DP comprising a digital micro-mirror device for the display of the television picture. The power supply unit comprises for this application in addition a second switch SW2, for switching through the voltage U1 to the light processing unit DLP. Currently used DLP units need in particular a DC voltage within a voltage range of 350-400 volts, which is advantageously provided directly by the pre-converter C, which output voltage U1 can be adjusted to the required operating voltage of the DLP unit DP. During standby mode, the DLP unit is switched off via the switch SW2, for reducing the power consumption of the DLP unit in the standby mode to zero. The voltage U1 provided in this embodiment by the pre-converter C is 390 Volts, which can be adjusted by using respective resistor values within the regulation loop of the pre-converter C, as known for a person skilled in the art.

For the digital mirror device of the DLP unit DP in addition supply voltages U11 and U12 are generated via regulation units RG1, RG2 from the output voltage U10. The voltage U10 is generated by the secondary winding W27 in a forward mode, in which the energy is transferred to the secondary winding W27, when the switching transistor T2 is conducting. In this mode, the voltage U10 depends essentially on the voltage across the winding W22 and the winding ratio of the windings W22 and W27.

Also the output voltages U8 and U9 are generated in the forward mode. The diodes D2-D4 are therefore conducting for charging the capacitors C2-C4, when the switching transistor T2 is conducting. Because the input voltage U1 of the primary winding W22 of the transformer TR2 is stabilized, the output voltages U8-U10 are stabilized accordingly. The voltages U8, U9 are used in particular for an audio power amplifier, which can have high load changes during operation. The output voltage U7 is regulated in a flyback mode via the regulating loop RL2, and the output voltage U6, which is provided by the secondary winding W23 via a diode D5 also during flyback, is therefore also stabilized. The voltage polarities at the windings of the transformer TR2 are denoted by black dots, which illustrate same voltage polarities at the terminals of the windings for a certain time.

When using secondary windings W25-W27 operating in the forward mode, the size of the transformer TR2 can be kept comparatively small, because the core of the transformer TR2 has to be designed essentially with respect to the power transferred to the windings W23, W24 during flyback operation. Only the higher current through the switching transistor T2 has to be taken into account, when the transistor T2 is conducting, which depends now in addition on the load coupled to the windings W25, W26 and W27.

The power supply unit can be constructed therefore as a compact and cost efficient module, which comprises a standby mode with low power consumption, and which can be used in particular for flat television displays. But the present invention is not limited to the embodiments as described above and various available modifications become possible for those skilled in the art without departing from the scope of the invention. For the power supply A in particular a linear, non-switching power supply may be used.

## Claims

1. Power supply unit for a standby operation mode and a normal operation mode comprising a first power supply (A) providing output voltages (U2-U5) during the standby operation mode, a second power supply (B) providing output voltages (U6-U10) during the normal operation mode, and a pre-converter (C) for providing a power factor correction, the pre-converter (C) operating as an up-converter during the normal operation mode and being switched off during the standby mode.

2. The power supply unit of claim 1, wherein a supply voltage (VCC3) for the pre-converter (C) is provided by the first or the second power supply (A, B) for switching the pre-converter (C) on and off.

3. The power supply unit of claim 2, wherein the supply voltage (VCC3) for the pre-converter (C) is provided by the second power supply (B) for switching the pre-converter (C) on, after the second power supply (B) is switched on.

4. The power supply unit of claim 1, 2 or 3, wherein at least the second power supply (B) is a switched mode power supply.

5. The power supply unit in accordance with one of the preceding claims, wherein the supply voltage (VCC3) for the pre-converter (C) is provided by an auxiliary winding (WX) of a transformer (TR2) of the first or the second power supply (B).

6. Power supply unit in accordance with one of the preceding claims, wherein the pre-converter comprises a regulation loop for providing a stabilized output voltage (U1), which is coupled to a primary winding (WA1) of a transformer (TR1) of the first power supply unit (A) and to a primary winding (WB1) of a transformer (TR2) of the second power supply (B).

7. The power supply unit of claim 6, wherein the transformer (TR2) of the second switched mode power supply (B) comprises a secondary winding (W25, W26, W27), which operates in a forward power conversion mode for providing stabilized supply voltages (U8-U10).

8. The power supply unit in accordance with one of the preceding claims, wherein the output voltage (U1) of the pre-converter (C) is within a voltage range of 350 to 400 Volts and is coupled to a digital light processing unit (DP).

9. Television set, comprising a power supply unit in accordance with one of the preceding claims 6 - 8.

10. The television set of claim 9, wherein the television set comprises an audio amplifier, and a supply voltage (U8, U9) of a forward secondary winding (W25, W26) of the transformer (TR2) of the second switched mode power supply (B) is coupled to the audio amplifier.

11. The television set of claim 9 or 10, wherein the television set is a rear-projection television set comprising a digital light processing unit (DP), and the output voltage (U1) of the pre-converter (C) is coupled to the digital light processing unit (DP).

12. Method for switching on a power supply unit comprising a first power supply (A) providing output voltages during a stand-by operation mode, a second power supply (B) providing output voltages during a normal operation mode and a pre-converter (C) for providing a power factor correction for the power supply unit, the method comprising the steps of:
after switching on the power supply unit, the stand-by mode power supply (A) is starting,
the on mode power supply (B) is starting via a supply voltage (VCC2) provided by the stand-by mode power supply (A), and the pre-converter (C)is starting via a supply voltage (VCC3) provided by the on mode power supply (B).
